(19)

Europäisches
Patentamt

European
Patent Office

Office européen
des brevets

(11) **EP 4 006 486 A1**

(12) **EUROPEAN PATENT APPLICATION**
published in accordance with Art. 153(4) EPC

(43) Date of publication:
**01.06.2022 Bulletin 2022/22**

(21) Application number: **20853748.0**

(22) Date of filing: **21.08.2020**

(51) International Patent Classification (IPC):
***G01C 11/00*** *(2006.01)*     ***G01S 11/12*** *(2006.01)*
***G01B 11/02*** *(2006.01)*

(86) International application number:
**PCT/CN2020/110572**

(87) International publication number:
**WO 2021/032197 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.08.2019 CN 201910772025**

(71) Applicant: **Great Wall Motor Company Limited
Baoding, Hebei 071000 (CN)**

(72) Inventor: **MIYAHARA, Shunji
Baoding, Hebei 071000 (CN)**

(74) Representative: **Klunker IP
Patentanwälte PartG mbB
Destouchesstraße 68
80796 München (DE)**

(54) **MONOCULAR VISION DISTANCE MEASUREMENT METHOD, STORAGE MEDIUM, AND MONOCULAR CAMERA**

(57) The present application relates to the technical field of intelligent transportation and image processing, and more particularly to a monocular vision ranging method, a storage medium, and a monocular camera. The method includes: calculating a first distance between a target and a monocular camera, based on a geometric relationship between the monocular camera and the target; calculating a second distance between the target and the monocular camera, based on a size ratio of the target to a reference target in a corresponding reference image; evaluating credibilities of the first distance and the second distance, and determining weight values assigned to the first distance and the second distance, respectively, in which, the higher the credibilities are, the higher the weight values are; and calculating a final distance between the target and the monocular camera, based on the first distance, the second distance, and the weight values respectively corresponding to the first distance and the second distance. The present application may realize better, more stable, and wider target detection.

S100
calculating a first distance between a target and a monocular camera, based on a geometric relationship between the monocular camera and the target;

S200
calculating a second distance between the target and the monocular camera, based on a size ratio of the target to a reference target in a corresponding reference image;

S300
evaluating credibilities of the first distance and the second distance, and determining weight values assigned to the first distance and the second distance, respectively; and

S400
calculating a final distance between the target and the monocular camera, based on the first distance, the second distance, and the weight values respectively corresponding to the first distance and the second distance.

FIG. 1

**EP 4 006 486 A1**

**Description**

CROSS-REFERNECE TO RELATED APPLICATIONS

This application claims the benefit of Chinese Patent Application No. 201910772025.6 filed Aug. 21, 2019, the contents of which are incorporated herein by reference.

TECHNICAL FIELD

The present application relates to the technical field of intelligent transportation and image processing, and more particularly to a monocular vision ranging method, a storage medium, and a monocular camera.

BACKGROUND

At present, vehicles having autonomous driving (AD) functions or advanced driver assistance systems (ADAS) have been introduced to the market, which has greatly promoted the development of intelligent transportation.
In the existing technology, the sensors supporting AD/ADAS mainly include radar, visual camera system, lidar, ultrasonic sensor, and the like, of which, the visual camera system is the most widely used due to its capability of obtaining the same two-dimensional image information as human vision, and its typical application includes lane detection, object detection, vehicle detection, pedestrian detection, cyclist detection, and other designated target detection.
The existing visual camera systems configured for object recognition/detection mainly include monocular cameras and stereo cameras, both of which have their own characteristics. The monocular cameras are compact, simple, and easy to install, and require less computation than the stereo cameras. Due to these advantages, the monocular cameras are increasingly used in the actual market. However, the monocular cameras have a fatal disadvantage, that is, the distance estimation accuracy is not sufficient (lower than that of the stereo cameras), so it has long been expected to improve the distance estimation accuracy of the monocular cameras.

SUMMARY

In view of the above, it is an object of the present application to provide a monocular vision ranging method, so as to tackle the poor distance estimation accuracy of the existing monocular cameras.
To achieve the above object, the present application adopts the following technical solutions:
A monocular vision ranging method, comprises: calculating a first distance between a target and a monocular camera, based on a geometric relationship between the monocular camera and the target; calculating a second distance between the target and the monocular camera, based on a size ratio of the target to a reference target in a corresponding reference image, in which, the size ratio comprises a height ratio or a width ratio; evaluating credibilities of the first distance and the second distance, and determining weight values assigned to the first distance and the second distance, respectively, in which, the higher the credibilities are, the higher the weight values are; and calculating a final distance between the target and the monocular camera, based on the first distance, the second distance, and the weight values respectively corresponding to the first distance and the second distance.
The monocular vision ranging method is explained hereinbelow from one aspect. said calculating a first distance between a target and a monocular camera comprises: setting an imaginary window at a distance in a range of interest of the monocular camera, in which, the imaginary window has a predetermined physical size and comprises all or part of the target and a bottom of the imaginary window touches a real ground surface; and defining a distance from the monocular camera to the imaginary window as the first distance d1.
Furthermore, said calculating a first distance between a target and a monocular camera comprises: setting a plurality of imaginary windows at different distances from the monocular camera in a range of interest of the monocular camera, in which, each of the plurality of imaginary windows has a different distance from the monocular camera and has the same physical size and comprises all or part of the target; evaluating a height ratio between a target height and a distance from a target bottom to each window bottom; and scoring each imaginary window according to an evaluation result, selecting an imaginary window having a highest score, and taking a distance between the imaginary window having a highest score and the monocular camera as the first distance d1.
Furthermore, said evaluating a height ratio between a target height and a distance from a target bottom to each window bottom comprises: calculating the height ratio between the target height and the distance from the target bottom to each window bottom according to the physical size of each imaginary window, and evaluating the height ratio between the target height and the distance from the target bottom to each window bottom according to a calculation result.
Furthermore, said evaluating the credibility of the first distance comprises: acquiring a height h1 of the target and a distance h2 from a target bottom to a window bottom, which is configured to determine the first distance; and

calculating a ratio between h1 and h2, expressed by h2/h1, in which, the closer the ratio h2/h1 is to 0, the higher the corresponding reliability is.

Furthermore, said calculating a second distance between the target and the monocular camera comprise the following steps: acquiring a size parameter s1 of the target, in which, the parameter s1 of the target comprises a height h1 of the target or a width w1 of the target; acquiring a size parameter s_ref of the reference target in the reference image corresponding to the size parameter s1 of the target, in which, the reference image has a reference distance d ref from the monocular camera, and the size parameter of the reference target comprises a height h ref of the reference target or a width w ref of the reference target; and acquiring a second distance d2 according to the following formula:

$$d2 = (s\_ref/s1) * d\_ref.$$

Furthermore, said evaluating the credibility of the second distance comprises: determining a ratio between s1 and s_ref, expressed by s_ref/s1, in which, the closer the ratio s_ref/s1 is to 1, the higher the reliability of the corresponding second distance is.

Furthermore, said calculating a final distance between the target and the monocular camera, based on the first distance, the second distance, and the weight values respectively corresponding to the first distance and the second distance comprises:

calculating the final distance by adopting the following formula:

$$range\_w\_r=(d1*point\_win+d2*point\_ref)/(point\_win+point\_ref)$$

in which, range_w_r represents the final distance, d1 represents the first distance, pint win represents a weight value corresponding to the first distance, d2 represents the second distance, point_ref represents a weight value corresponding to the second distance.

Furthermore, when adopting multiple imaginary windows, the final distance range_w_r that has a highest score based on the first weight value point_win and the second weight value point_ref are selected as the final distance, in which, the score is a sum of the first weight value point_win and the second weight value point_ref, or a function of the first weight value point_win and the second weight value point_ref.

Compared with the existing technology, the monocular vision ranging method according to embodiments of the present application combines two ranging schemes of the first distance and the second distance (that is, based on the geometric relationship and based on image matching) to jointly determine the final distance, which significantly improves the ranging reliability of the monocular camera, and relative to the single-distance approach, if one ranging scheme is not available, another ranging scheme can be used in some cases. Therefore, the monocular vision ranging method according to embodiments of the present application can achieve better, more stable, and wider target detection.

It is another object of the present application to provide a machine-readable storage medium and a processor, so as to tackle the poor distance estimation accuracy of the existing monocular cameras.

To achieve the above object, the present application adopts the following technical solutions:

A machine-readable storage medium, being stored with instructions configured to cause a machine to execute the above monocular vision ranging method.

A processor, configured for running a program, when the program is runed, the above monocular vision ranging method is executed.

The machine-readable storage medium and the processor have the same advantages over the existing technology as the above monocular vision ranging method, which will not be repeated here.

It is another object of the present application to provide a monocular camera, so as to tackle the poor distance estimation accuracy of the existing monocular cameras.

To achieve the above object, the present application adopts the following technical solutions:

A monocular camera, comprises: one or more processors; and a memory for storing one or more programs. When the one or more programs is executed by the one or more processors, the one or more processor is caused to implement the above monocular vision ranging method.

The monocular camera has the same advantages over the existing technology as the above monocular vision ranging method, which will not be repeated here.

Other features and advantages of the present application will be described in detail in the detailed description hereinbelow.

BRIEF DESCRIPTION OF THE DRAWINGS

The accompanying drawings constituting a part of the present application are used to provide further understanding of the present application, and the schematic embodiments of the present application and their descriptions are used to explain the present application and do not constitute an improper limitation of the present application. In the drawings:

FIG. 1 is a schematic flowchart of a monocular vision ranging method according to an embodiment of the present application;

FIG. 2 is a schematic diagram of the principle of ranging based on a geometric relationship between the monocular camera and an actual target according to an embodiment of the present application;

FIG. 3 is a schematic diagram of a measurement image and a reference image in an embodiment of the present application;

FIG. 4(a) is a schematic diagram showing the setting of three imaginary windows;

FIG. 4(b) is a schematic diagram showing the relative positions of the three imaginary windows corresponding to FIG. 4(a) and the actual target in the window;

FIG. 4(c) shows a schematic flowchart of determination of the first distance based on multiple windows;

FIG. 4(d) shows a schematic diagram showing the position of the target in the window; and

FIG. 5(a) and FIG. 5(b) are schematic diagrams of determining the weight value using measurement method_1 and measurement method_2, respectively.

DETAILED DESCRIPTION OF THE EMBODIMENTS

It should be noted that the embodiments of the present application and the features of the embodiments may be combined with each other in conditions of no conflict.

The present application will be described in detail below with reference to the accompanying drawings and in conjunction with the embodiments.

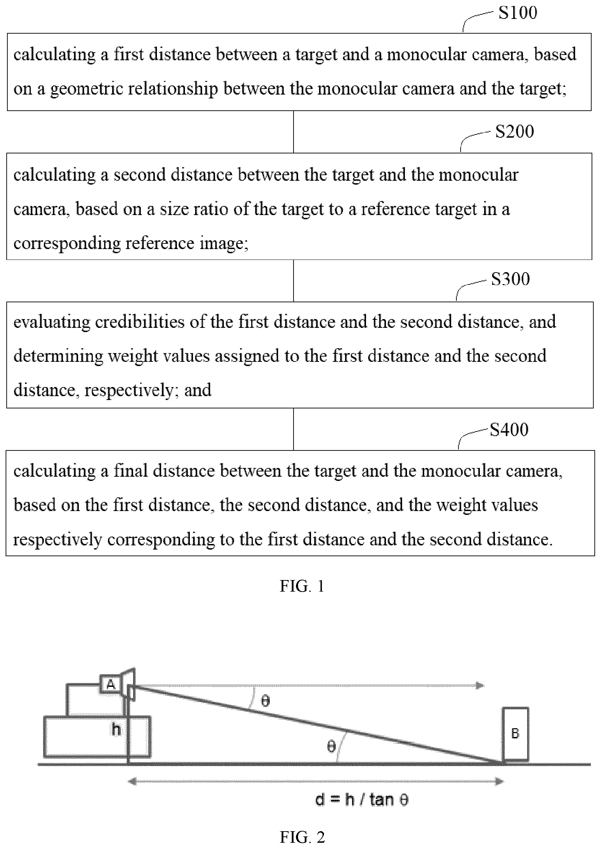

FIG. 1 is a schematic flowchart of a monocular vision ranging method provided by an embodiment of the present application, in which, the monocular vision refers to the monocular camera installed in the vehicle, and the ranging refer to measure a distance between the monocular camera and an actual target around the vehicle. As shown in FIG. 1, the monocular vision ranging method may comprise steps S100, S200, S300, and S400.

In Step S100, a first distance between a target and a monocular camera is calculated based on a geometric relationship between the monocular camera and the target;

The target refers to a target that is expected to be shot by the monocular camera, for example, other vehicles, obstacles like road cones, and the like in front of the vehicle.

For example, FIG. 2 is a schematic diagram of the principle of ranging based on a geometric relationship between the monocular camera and an actual target according to an embodiment of the present application. As shown in FIG. 2, assuming that a coordinate of the monocular camera A is in parallel to a ground surface, and defining that a distance between the monocular camera A and the ground surface is h, an angle between the ground surface and the line of sight from the monocular camera A to a bottom of the target B touching the ground surface (that is, the lower edge of the target) is $\theta$, then the distance from the monocular camera A to the target B is d1=h/tan. In practice, however, it is difficult to calculate the exact distance d1 because the lower edge of the target is difficult to be determined. In view of this, the embodiment of the present application proposes a new method for calculating the distance d1, which will be described in detail below.

In step S200, a second distance between the target and the monocular camera is calculated based on a size ratio of the target to a reference target in a corresponding reference image.

The reference target refers to a target in an image shot by the same camera with a reference distance before the measurement, or a target calculated according to the reference distance. In an optional embodiment, said calculating a second distance between the target and the monocular camera may comprise the following steps: acquiring a size parameter s1 of the target, in which the size parameter s1 of the target comprises a height h1 of the target or a width w1 of the target; acquiring a size parameter s ref of the reference target in the reference image corresponding to the size parameter s1 of the target, in which, the reference image has a reference distance d ref from the monocular camera, and the size parameter of the reference target comprises a height h ref of the reference target or a width w ref of the reference target; and acquiring a second distance d2 according to the following formula:

$$d2 = (s\_ref/s1) * d\_ref.$$

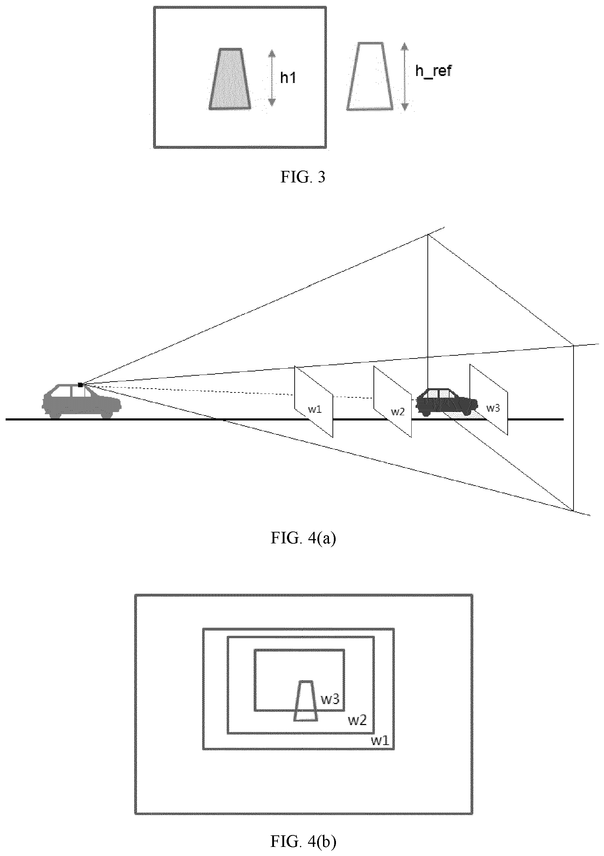

Furthermore, taken the height as an example, FIG. 3 is a schematic diagram showing the measurement image and the reference image in an embodiment of the present application, in which, the height of the target (the actual target) in the measurement image is defined as h1, the height of the reference target in the reference image is h ref, and the reference distance between the monocular camera and the reference image is defined as d_ref, then the step of calculating the second distance may comprise:

acquiring a height h1 of the actual target B; acquiring the height h ref of the reference target in the reference image which has the reference distance d ref from the monocular camera A; and calculating the second distance d2:

$$d2 = (h\_ref/h1) * d\_ref$$

The method for calculation of the second distance d2 by adopting the width ratio w_ref/w1 is similar to the method by adopting the height ratio, which will not be repeated herein.

The ranging method in step S100 is denoted as measurement method_1, and the ranging method in step S200 is denoted as measurement method_2, both methods have their own advantages and disadvantages, which are listed in Table 1.

**Table 1**

|  | Measurement method_1 | Measurement method_2 |
|---|---|---|
| Respective basis | the geometric relationship | Image matching and reference height ratio |
| Parameters | Bottom position (lower edge) of the target | h_ref/h1 |
| Distance | d1 = h/tan $\theta$ | d2 = (h_ref/h1) * d ref |
| Advantages | Accurate image is not necessary | Geometric information is not required |
| Disadvantages | Accurate lower edge of the target is required, as well as geometric information. | Accurate reference image and measurement image are both required. |

In an embodiment of the present application, the measurement method_1 based on the geometric relationship can be realized by further adopting a range window algorithm (RWA). The RWM may further include a single window implementation manner and a multi-window implementation manner, which are specifically introduced as follows:

1) Single window

An imaginary window is set at a distance in a range of interest of the monocular camera, the imaginary window has a predetermined physical size, and comprises all or part of the target and a bottom of the imaginary window touches a real ground surface. In such condition, a distance from the monocular camera to the imaginary window is defined as the first distance.

2) Multi-window

A plurality of imaginary windows are set in a range of interest of the monocular camera, in which, each of the imaginary windows has a different distance from the monocular camera and has the same physical size and comprise all or part of the target. Taken the target being a vehicle as an example, FIG. 4(a) is a schematic diagram showing the setting of three imaginary windows, which are denoted as w1, w2, and w3, respectively, FIG. 4(b) is a schematic diagram showing the relative positions between the three imaginary windows corresponding to FIG. 4(a) and the actual target. It is known that the position relation between each imaginary window and the actual target is different. The distance between each imaginary window and the monocular camera can be defined as range window, which can be a geometric progression of the set distance. For example, the range_window of each window is 50 m, 60 m = 50 × 1.2 m, 73.2 m = 60 × 1.2 m. Also, each window has the same physical sizes, such as 4 × 1.6 m.

Thus, in each image corresponding to each imaginary window, a height ratio between a target height and a distance from a target bottom to each window bottom is evaluated. Each imaginary window is scored according to an evaluation result, an imaginary window having a highest score is selected, and a distance between the imaginary window having a highest score and the monocular camera is taken as the first distance.

In a preferred embodiment, the step of evaluating a height ratio between a target height and a distance from a target bottom to each window bottom may comprise: calculating the height ratio between the target height and the distance from the target bottom to each window bottom according to the physical size of each imaginary window, and evaluating the height ratio between the target height and the distance from the target bottom to each window bottom according to a calculation result. For example, the physical size of the imaginary window is 4 m×2 m, the height ratio between the target height and the distance from the target bottom to each window bottom can be calculated according to the window size. It should be noted that, in other embodiments, in addition to the height, those items required to be evaluated may also include other metrics, such as a width, a side length, and an inner/outer texture, and the like of the actual target. In the existing technology, the target is generally represented by pixels, and one target may be represented by multiple pixels, but in embodiments of the present application, the target is represented based on pixel metrics, including height, width, and the like used herein.

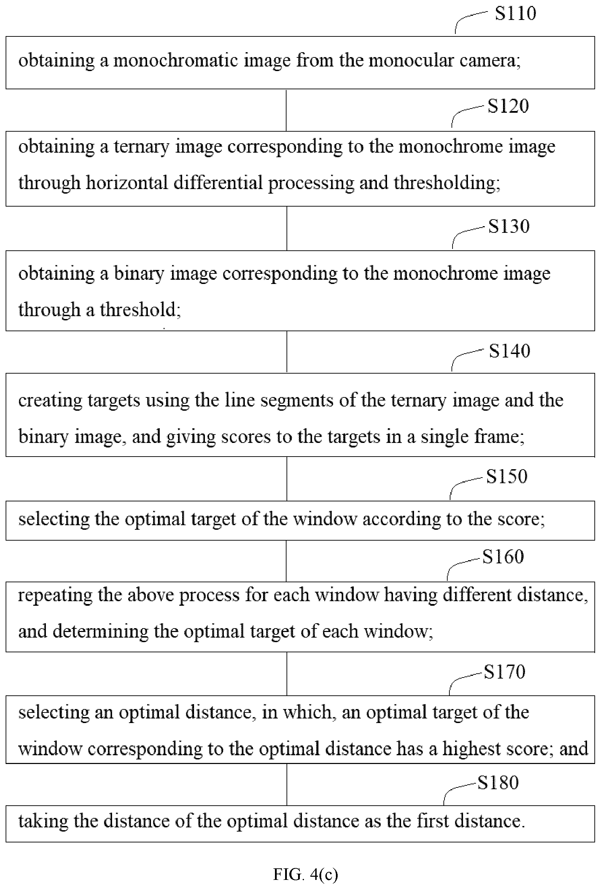

Specifically, FIG. 4(c) shows a schematic flowchart of determination of the first distance based on multiple windows. As shown in FIG. 4(c), the determination of the first distance may include steps S110-S180:

In step S110, a monochromatic image is obtained from the monocular camera.

In step S120, a ternary image corresponding to the monochrome image is obtained through horizontal differential processing and thresholding.

Line segments in a ternary image are created by connecting edge points.

In step S130, a binary image corresponding to the monochrome image is obtained through a threshold. For example, a maximum between-class variance (OTSU) can be used to create binary image. This binary image is used to separate the target from the background. This aids in creating targets from line segments. The binary image can suppress ghost targets between two targets.

In step S140, targets are created using the line segments of the ternary image and the binary image, and scores are given to the targets in a single frame.

In step S150, the optimal target of the window is selected according to the score.

In step S160, the above process is repeated for each window having different distance, and the optimal target of each window is determined.

In step S170, an optimal distance is selected, and an optimal target of the window corresponding to the optimal distance has a highest score.

In step S180, the distance of the optimal distance is taken as the first distance.

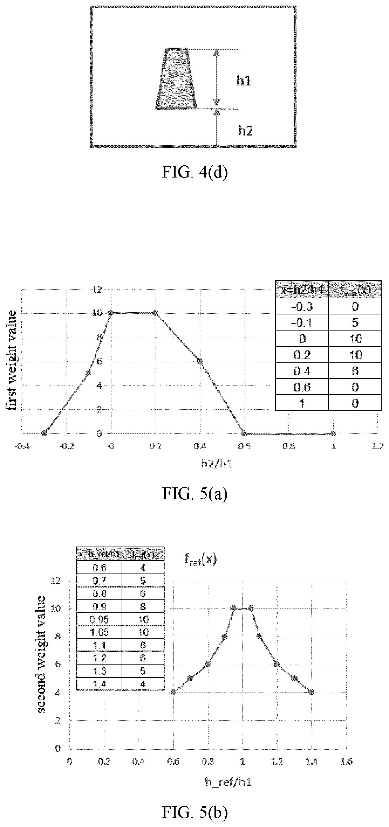

FIG. 4(d) is a schematic diagram showing the position of the target in a window. The height of the actual target is defined as h1 (consistent with the context), the distance from the target bottom to each window bottom (which may be the ground surface) is defined as h2, then the position of the actual target at the bottom of the window may be expressed by h2/h1, which is converted into the expression based on height from the expression based on pixels. Thus, following Table 1 in the above, Table 2 further shows the comparison of the advantages and disadvantages of the measurement method_1 based on RWA and the measurement method_2.

**Table 2**

|  | Measurement method_1 | Measurement method_2 |
|---|---|---|
| Respective basis | RWA | Image matching and reference height ratio |
| Parameters | h2/h1 | h_ref/h1 |
| Distance | d1 is the distance of the window | d2 = (h_ref/h1) * d_ref |
| Advantages | Accurate h1 is not required. | h2 is not required, neither multiple windows are required. |

(continued)

|  | Measurement method_1 | Measurement method_2 |
|---|---|---|
| Disadvantages | Accurate h2 (accurate angle and height of the camera) is required. | Accurate h1 is required. |

In an embodiment of the present application, the measurement method_2 may be used to support the measurement method_1, and a technical solution for combining the two methods to achieve accurate ranging will be further described below.

In step S300, credibilities of the first distance and the second distance are evaluated, and weight values assigned to the first distance and the second distance are determined, respectively.

The higher the credibilities are, the higher the weight values are.

Regarding the first distance, taken the above RWA as an example, h2/h1 reflects the credibility thereof. Theoretically, the actual target is in a state of contacting the ground surface, thus, h2 should be 0, and h1 should be close to the real height, then h2/h1 should be close to 0. The closer h2/h1 is to 0, the higher the corresponding reliability is.

Regarding the second distance, the evaluation of the credibility of the second distance comprises: determining a ratio between s1 and s_ref, that is, s_ref/s1, in which, the closer the ratio s_ref/s1 is to 1, the higher the reliability of the corresponding second distance is. Taken Table 2 as an example, h_ref/h1 reflects the credibility. h_ref is the height of the reference target in the reference image at a reference distance from the monocular camera, and can be determined by calculation or actual image measurement. For example, the height h ref can be provided by placing the target at a distance of 100 m for photographing, and the 100 m will be the reference distance d_ref. Theoretically, h ref should be consistent with h1, and h_ref/h1 should be close to 1. The closer h_ref/h1 is to 1, the higher the corresponding credibility is.

In step S400, a final distance between the target and the monocular camera is calculated, based on the first distance, the second distance, and the weight values respectively corresponding to the first distance and the second distance.

In particular, the final distance is calculated by adopting the following formula:

$$range\_w\_r=(d1*point\_win+d2*point\_ref)/(point\_win+point\_ref)$$

in which, range w r represents the final distance, d1 represents the first distance, pint win represents a weight value corresponding to the first distance, d2 represents the second distance, point_ref represents a weight value corresponding to the second distance. That is, the weighted sum of the ranging results obtained by the measurement method_1 and the measurement method 2 respectively is obtained by the above formula, thereby improving the ranging accuracy.

In an optional embodiment, when adopting multiple imaginary windows, the final distance range_w_r that has a highest score based on the first weight value point_win and the second weight value point_ref are selected as the final distance, in which, the score is a sum of the first weight value point_win and the second weight value point _ref, or a function of the first weight value point_win and the second weight value point_ref.

The effects that can be obtained by adopting the method of the embodiment of the present application are specifically described by way of examples herein. In this example, FIG. 5(a) and FIG. 5(b) are schematic diagrams of determining the weight values using measurement method_1 and measurement method_2, respectively. The first weight value in FIG. 5(a) is represented by $f_{win}(x)$, and is determined based on h2/h1, and the second weight value in FIG. 5(b) is represented by $f_{ref}(x)$ and determined based on h_ref/h1. Based on FIG. 5(a) and FIG. 5(b), it can be understood that the smaller the absolute value of h2/h1 (closer to 0) is, the higher the reliability is, and the closer h_ref/h1 is to 1, the higher the reliability is.

For this example, based on the selection of weight value as shown in FIG. 5(a) and FIG. 5(b), for the imaginary window i = 1~N, the following ranging processing is further performed:

1) h2/h1: range_win=range_window;
in which, rang win corresponds to the first distance d1 in the above.

2) h_ref/h1: based on the height ratio, range_ref= range_window * (h_ref/h1);
in which, range ref corresponds to the second distance d2 in the above.

3) h2/h1: referring to FIG. 5(a), the first weight value is defined as ponint_win, then point_win = $f_{win}$(h2/h1).

4) h_ref/h1: referring to FIG. 5(b), the second weight value is defined as point _ref, then point_ref = $f_{ref}$(h_ref/h1).

5) range_w_r (i) = (range_win*point_win + range_ref*point_ref) / (point_win + point_ref);
in which, range_w_r (i) represents a ranging result of an i-th window.

6) point w r (i) = point_win + point_ref;
in which, point_w_r (i) represents a final weight value of the i-th window.

7) for all the related windows, an optimal range_w_r(i) is selected based on point w r (i).
That is, a window that has the highest weight value is selected as the optimal window, to determine range_w_r(i), and in such condition, i corresponds to the number of the optimal window.

8) range_new=range_w_r(i0), point_w_r(i0).
In which, range new represents a finally calculated distance of the actual target relative to the monocular camera. Corresponding to the data in FIGS. 5(a)-5(b), the estimated distances of the four targets detected within 150 m in this example are 145.2 m, 146.3 m, 146.7 m and 146.3 m, with an accuracy of about 3.2%, which is much better than the ranging by normal monocular camera. It should be noted that the monocular camera usually has an accuracy of only 5%, this is because that in principle the monocular camera cannot measure the range without introducing certain assumptions, such as: the target and the monocular camera system are located at the same level (height level relative to the ground surface) and the size of the target are known.

To sum up, the monocular vision ranging method according to embodiments of the present application combines two ranging schemes of the first distance and the second distance (that is, based on the geometric relationship and based on image matching) to jointly determine the final distance, which significantly improves the ranging reliability of the monocular camera, and relative to the single-distance approach, if one ranging scheme is not available, another ranging scheme can be used in some cases. Therefore, the monocular vision ranging method according to embodiments of the present application can achieve better, more stable, and wider target detection.

Another embodiment of the present application further provides a machine-readable storage medium. The machine-readable storage medium is stored with instructions configured to cause a machine to execute the above-mentioned monocular vision ranging method. The machine-readable storage medium includes but is not limited to phase-change memory (PRAM), static random access memory (SRAM), dynamic random access memory (DRAM), other types of random access memories (RAM), only read-only memory (ROM), electrically erasable programmable read-only memory (EEPROM), flash memory (Flash Memory) or other memory technologies, compact disc read-only memory (CD-ROM), digital versatile disc (DVD) or other optical storage, magnetic cassette tapes, magnetic tape-disc storage or other magnetic storage devices, and various other media that can store program code.

Another embodiment of the present application also provides a monocular camera. The monocular camera includes: one or more processors; and a memory for storing one or more programs, which, when being executed by the one or more processors, causes the one or more processor to implement the above-mentioned monocular vision ranging method.

An embodiment of the present application further provides a processor, configured for running a program. When the program is runed, the above-mentioned monocular vision ranging method is executed.

The memory may include non-persistent memory in computer readable media, random access memory (RAM) and/or non-volatile memory, such as read only memory (ROM) or flash memory (flash RAM). Memory is an example of a computer-readable medium. The processor may be a general purpose processor, a special purpose processor, a conventional processor, a digital signal processor (DSP), multiple microprocessors, one or more microprocessors associated with a DSP core, a controller, a microcontroller, an application specific integrated circuit (ASIC), a field programmable gate array (FPGA) circuit, any other type of integrated circuit (IC), state machine, etc.

The present application also provides a computer program product, which, when being executed on a vehicle, is adapted to execute a program initialized with the steps of the above-described monocular vision ranging method.

As will be appreciated by those skilled in the art, the embodiments of the present application may be provided as a method, a system, or a computer program product. Accordingly, the present application may take the form of an entirely hardware embodiment, an entirely software embodiment, or an embodiment combining software and hardware aspects. Furthermore, the present application may take the form of a computer program product implemented in one or more computer-usable storage media (including, but not limited to, disk storage, CD-ROM, optical storage, etc.) containing computer-usable program codes therein.

The present application is described with reference to flowcharts and/or block diagrams of methods, devices (systems), and computer program products according to embodiments of the present application. It will be understood that each process and/or block in the flowcharts and/or block diagrams, and combinations of processes and/or blocks in the flowcharts and/or block diagrams, can be implemented by computer program instructions.

These computer program instructions may be provided to the processor of a general purpose computer, special purpose computer, embedded processor, or other programmable data processing device to produce a machine, so as to produce a means configured for implementing functions specified in one or more processes in each flowchart and/or one or more blocks in each block diagram by instructions executed by processors of the computer or other programmable data processing device.

These computer program instructions may also be stored in a computer-readable memory capable of directing a computer or other programmable data processing device to work in a particular manner, such that the instructions stored in the computer-readable memory produce an article of manufacture comprising instruction apparatus. The instruction apparatus implements the functions specified in one or more processes of the flowcharts and/or one or more blocks of the block diagrams.

These computer program instructions can also be loaded on a computer or other programmable data processing device to cause a series of operational steps to be performed on the computer or other programmable device to produce a computer-implemented process, such that the instructions executed on the computer or other programmable data processing device provide steps for implementing the functions specified in one or more processes of the flowcharts and/or one or more blocks of the block diagrams.

In a typical configuration, a computing device includes one or more processors (CPUs), input/output interfaces, network interfaces, and memories. The above description is only a preferred embodiment of the present application, and is not intended to limit the present application. Any modification, equivalent replacement, improvement, etc. made within the spirit and principle of the present application shall be included within the protection scope of the present application.

**Claims**

1. A monocular vision ranging method, comprising:

   calculating a first distance between a target and a monocular camera, based on a geometric relationship between the monocular camera and the target;
   calculating a second distance between the target and the monocular camera, based on a size ratio of the target to a reference target in a corresponding reference image,
   wherein the size ratio comprises a height ratio or a width ratio;
   evaluating credibilities of the first distance and the second distance, and determining weight values assigned to the first distance and the second distance, respectively, wherein, the higher the credibilities are, the higher the weight values are; and
   calculating a final distance between the target and the monocular camera, based on the first distance, the second distance, and the weight values respectively corresponding to the first distance and the second distance.

2. The monocular vision ranging method according to claim 1, wherein said calculating a first distance between a target and a monocular camera comprises:

   setting an imaginary window at a distance in a range of interest of the monocular camera, wherein the imaginary window has a predetermined physical size and comprises all or part of the target and a bottom of the imaginary window touches a real ground surface; and
   defining a distance from the monocular camera to the imaginary window as the first distance d1.

3. The monocular vision ranging method according to claim 1, wherein said calculating a first distance between a target and a monocular camera comprises:

   setting a plurality of imaginary windows at different distances from the monocular camera in a range of interest of the monocular camera, wherein, each of the plurality of imaginary windows has a different distance from the monocular camera and has the same physical size and comprises all or part of the target;
   evaluating a height ratio between a target height and a distance from a target bottom to each window bottom; and
   scoring each imaginary window according to an evaluation result, selecting an imaginary window having a highest score, and taking a distance between the imaginary window having a highest score and the monocular camera as the first distance d1.

4. The monocular vision ranging method according to claim 1, wherein said evaluating a height ratio between a target height and a distance from a target bottom to each window bottom comprises:

calculating the height ratio between the target height and the distance from the target bottom to each window bottom according to the physical size of each imaginary window, and evaluating the height ratio between the target height and the distance from the target bottom to each window bottom according to a calculation result.

5. The monocular vision ranging method according to any one of claims 2-4, wherein said evaluating the credibility of the first distance comprises:

acquiring a height h1 of the target and a distance h2 from a target bottom to a window bottom, which is configured to determine the first distance; and

calculating a ratio between h1 and h2, expressed by h2/h1, wherein the closer the ratio h2/h1 is to 0, the higher the corresponding reliability is.

6. The monocular vision ranging method according to claim 1, wherein said calculating a second distance between the target and the monocular camera comprise the following steps:

acquiring a size parameter s1 of the target, wherein the parameter s1 of the target comprises a height h1 of the target or a width w1 of the target;

acquiring a size parameter s ref of the reference target in the reference image corresponding to the size parameter s1 of the target, in which, the reference image has a reference distance d ref from the monocular camera, and the size parameter of the reference target comprises a height h ref of the reference target or a width w ref of the reference target; and

acquiring a second distance d2 according to the following formula:

$$d2 = (s\_ref/s1) * d\_ref.$$

7. The monocular vision ranging method according to claim 6, wherein said evaluating the credibility of the second distance comprises: determining a ratio between s1 and s_ref, expressed by s_ref/s1, wherein the closer the ratio s_ref/s1 is to 1, the higher the reliability of the corresponding second distance is.

8. The monocular vision ranging method according to claim 1, wherein said calculating a final distance between the target and the monocular camera, based on the first distance, the second distance, and the weight values respectively corresponding to the first distance and the second distance comprises:

calculating the final distance by adopting the following formula:

$$range\_w\_r=(d1*point\_win+d2*point\_ref)/(point\_win+point\_ref)$$

in which, range_w_r represents the final distance, d1 represents the first distance, pint win represents a weight value corresponding to the first distance, d2 represents the second distance, point_ref represents a weight value corresponding to the second distance.

9. The monocular vision ranging method according to claim 8, wherein when adopting multiple imaginary windows, the final distance range_w_r that has a highest score based on the first weight value point_win and the second weight value point_ref are selected as the final distance, in which, the score is a sum of the first weight value point_win and the second weight value point _ref, or a function of the first weight value point_win and the second weight value point_ref.

10. A machine-readable storage medium, being stored with instructions configured to cause a machine to execute the monocular vision ranging method according to any one of claims 1-9.

11. A monocular camera, comprising:

one or more processors; and

a memory for storing one or more programs;

wherein when the one or more programs is executed by the one or more processors, the one or more processor is caused to implement the monocular vision ranging method according to any one of claims 1-9.

12. A processor, configured for running a program, wherein when the program is runed, the monocular vision ranging method according to any one of claims 1-9 is executed.

S100

calculating a first distance between a target and a monocular camera, based on a geometric relationship between the monocular camera and the target;

S200

calculating a second distance between the target and the monocular camera, based on a size ratio of the target to a reference target in a corresponding reference image;

S300

evaluating credibilities of the first distance and the second distance, and determining weight values assigned to the first distance and the second distance, respectively; and

S400

calculating a final distance between the target and the monocular camera, based on the first distance, the second distance, and the weight values respectively corresponding to the first distance and the second distance.

FIG. 1

$$d = h / \tan \theta$$

FIG. 2

FIG. 3

FIG. 4(a)

FIG. 4(b)

S110

obtaining a monochromatic image from the monocular camera;

S120

obtaining a ternary image corresponding to the monochrome image through horizontal differential processing and thresholding;

S130

obtaining a binary image corresponding to the monochrome image through a threshold;

S140

creating targets using the line segments of the ternary image and the binary image, and giving scores to the targets in a single frame;

S150

selecting the optimal target of the window according to the score;

S160

repeating the above process for each window having different distance, and determining the optimal target of each window;

S170

selecting an optimal distance, in which, an optimal target of the window corresponding to the optimal distance has a highest score; and

S180

taking the distance of the optimal distance as the first distance.

FIG. 4(c)

FIG. 4(d)

| x=h2/h1 | f_{win}(x) |
|---------|------------|
| -0.3 | 0 |
| -0.1 | 5 |
| 0 | 10 |
| 0.2 | 10 |
| 0.4 | 6 |
| 0.6 | 0 |
| 1 | 0 |

FIG. 5(a)

| x=h_ref/h1 | f_{ref}(x) |
|------------|------------|
| 0.6 | 4 |
| 0.7 | 5 |
| 0.8 | 6 |
| 0.9 | 8 |
| 0.95 | 10 |
| 1.05 | 10 |
| 1.1 | 8 |
| 1.2 | 6 |
| 1.3 | 5 |
| 1.4 | 4 |

FIG. 5(b)

## INTERNATIONAL SEARCH REPORT

| International application No. |
| --- |
| **PCT/CN2020/110572** |

**A.    CLASSIFICATION OF SUBJECT MATTER**

G01C 11/00(2006.01)i;  G01S 11/12(2006.01)i;  G01B 11/02(2006.01)i

According to International Patent Classification (IPC) or to both national classification and IPC

**B.    FIELDS SEARCHED**

Minimum documentation searched (classification system followed by classification symbols)

G01C; G01S; G01B

Documentation searched other than minimum documentation to the extent that such documents are included in the fields searched

Electronic data base consulted during the international search (name of data base and, where practicable, search terms used)

DWPI; VEN; SIPOABS; CNABS; CNTXT; CNKI: 单目, 视觉, 测距, 距离, 目标, 参考, 尺寸, 比, 高度, 宽度, 几何, 关系, 评估, 可信度, 权重, 摄像头, monocular, visual, range, ranging, distance, ratio, weight, weighting

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 111521117 A (GREAT WALL MOTOR CO., LTD.) 11 August 2020 (2020-08-11) claims 1-11 | 1-12 |
| Y | CN 104897132 A (JIANGSU PROTRULY VISION TECHNOLOGY GROUP CO., LTD.) 09 September 2015 (2015-09-09) description paragraphs 6-35, figures 1-3 | 1-12 |
| Y | US 2019250631 A1 (FORD GLOBAL TECHNOLOGIES, LLC) 15 August 2019 (2019-08-15) description paragraphs 3-149, figures 1-9 | 1-12 |
| A | CN 106443650 A (CHENGDU RESEARCH INSTITUTE OF UESTC) 22 February 2017 (2017-02-22) entire document | 1-12 |
| A | CN 108909624 A (NORTHWESTERN POLYTECHNICAL UNIVERSITY) 30 November 2018 (2018-11-30) entire document | 1-12 |
| A | CN 103499334 A (BEIJING XIAOMI TECHNOLOGY CO., LTD.) 08 January 2014 (2014-01-08) entire document | 1-12 |

☑ Further documents are listed in the continuation of Box C.    ☑ See patent family annex.

| | |
| --- | --- |
| *    Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **11 November 2020** | **18 November 2020** |

| Name and mailing address of the ISA/CN | Authorized officer |
| --- | --- |
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**EP 4 006 486 A1**

**INTERNATIONAL SEARCH REPORT**

**C.    DOCUMENTS CONSIDERED TO BE RELEVANT**

| Category* | Citation of document, with indication, where appropriate, of the relevant passages | Relevant to claim No. |
|---|---|---|
| A | CN 107290738 A (SUZHOU AUTOMOBILE RESEARCH INSTITUTE (WUJIANG), TSINGHUA UNIVERSITY) 24 October 2017 (2017-10-24) entire document | 1-12 |
| A | CN 105574552 A (NORTHEASTERN UNIVERSITY) 11 May 2016 (2016-05-11) entire document | 1-12 |
| A | CN 110031829 A (BEIJING UNION UNIVERSITY) 19 July 2019 (2019-07-19) entire document | 1-12 |
| A | CN 107920211 A (GIONEE COMMUNICATION EQUIPMENT CO., LTD.) 17 April 2018 (2018-04-17) entire document | 1-12 |
| A | EP 1806595 A1 (MOBILEYE TECHNOLOGIES LTD.) 11 July 2007 (2007-07-11) entire document | 1-12 |

Form PCT/ISA/210 (second sheet) (January 2015)

**INTERNATIONAL SEARCH REPORT**
Information on patent family members

International application No.

**PCT/CN2020/110572**

| Patent document cited in search report | | | Publication date (day/month/year) | Patent family member(s) | | | Publication date (day/month/year) |
|---|---|---|---|---|---|---|---|
| CN | 111521117 | A | 11 August 2020 | None | | | |
| CN | 104897132 | A | 09 September 2015 | US | 2016320184 | A1 | 03 November 2016 |
| | | | | EP | 3089110 | B1 | 29 November 2017 |
| | | | | US | 9964406 | B2 | 08 May 2018 |
| | | | | EP | 3089110 | A1 | 02 November 2016 |
| US | 2019250631 | A1 | 15 August 2019 | CN | 110161488 | A | 23 August 2019 |
| | | | | US | 10545506 | B2 | 28 January 2020 |
| | | | | DE | 102019103369 | A1 | 14 August 2019 |
| CN | 106443650 | A | 22 February 2017 | None | | | |
| CN | 108909624 | A | 30 November 2018 | None | | | |
| CN | 103499334 | A | 08 January 2014 | CN | 103499334 | B | 17 August 2016 |
| CN | 107290738 | A | 24 October 2017 | None | | | |
| CN | 105574552 | A | 11 May 2016 | None | | | |
| CN | 110031829 | A | 19 July 2019 | None | | | |
| CN | 107920211 | A | 17 April 2018 | None | | | |
| EP | 1806595 | A1 | 11 July 2007 | DE | 602006006017 | D1 | 14 May 2009 |
| | | | | US | 2012200707 | A1 | 09 August 2012 |
| | | | | US | 9223013 | B2 | 29 December 2015 |
| | | | | US | 2007154068 | A1 | 05 July 2007 |
| | | | | US | 10127669 | B2 | 13 November 2018 |
| | | | | EP | 1806595 | B1 | 01 April 2009 |
| | | | | US | 2019073783 | A1 | 07 March 2019 |
| | | | | US | 2016098839 | A1 | 07 April 2016 |
| | | | | AT | 427506 | T | 15 April 2009 |
| | | | | US | 8164628 | B2 | 24 April 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910772025